(19) Europäisches Patentamt
European Patent Office
Office européen des brevets

(11) Veröffentlichungsnummer: **0 330 075 A2**

(12) # EUROPÄISCHE PATENTANMELDUNG

(21) Anmeldenummer: **89102669.2**

(22) Anmeldetag: **16.02.89**

(51) Int. Cl.⁴: **C07F 9/38 , C02F 5/14 , A61K 31/66**

(30) Priorität: **24.02.88 DE 3805663**

(43) Veröffentlichungstag der Anmeldung: **30.08.89 Patentblatt 89/35**

(84) Benannte Vertragsstaaten: **AT BE CH DE ES FR GB GR IT LI LU NL SE**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Blum, Helmut**
**Bertha-von-Suttner-Strasse 30**
**D-4000 Düsseldorf 13(DE)**
Erfinder: **Hemmann, Siglinde**
**Kantstrasse 28**
**D-4005 Meerbusch 1(DE)**

(54) **Oxaalkanpolyphosphonsäuren, ihre Verwendung als Thresholder sowie diese Verbindungen enthaltende, komplexierend wirkende Zusammensetzungen.**

(57) Die Erfindung betrifft Oxaalkanpolyphosphonsäuren und ihre Salze der allgemeinen Formel (I)

$$\begin{array}{ccccccccccc} & & & & & & R^2 & & PO_3M_2 & & \\ & & & & & & | & & | & & \\ R^1 & - & A & - & O & - & C & - & C & - & OH \\ & & & & & & | & & | & & \\ & & & & & & H & & PO_3M_2 & & \end{array} \qquad (I)$$

in der
$R^1$ für eine $C_1$ bis $C_{10}$-Alkylgruppe,
eine $C_6$ bis $C_{10}$-Arylgruppe, die gegebenenfalls substituiert ist,
eine Gruppe der allgemeinen Formel

$$\begin{array}{l} \;\;R^2 \\ \;\;| \\ -CCOOM \\ \;\;| \\ \;\;H \end{array}$$

oder eine Gruppe der allgemeinen Formel

$$\begin{array}{l} \;\;H \\ \;\;| \\ -CC(PO_3M_2)_2OH \\ \;\;| \\ \;\;R^2 \end{array}$$

steht,

EP 0 330 075 A2

$R^2$ für H oder Methyl steht,
A für die Struktureinheit

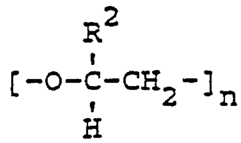

steht, worin n eine ganze Zahl von 1 bis 20 ist und
M für H oder das Kation einer Base steht
und die Verwendung der obigen Verbindungen als Komplexiermittel und als Thresholder sowie Zusammensetzungen, die eine oder mehrere Verbindungen der allgemeinen Formel (I) enthalten.

Figur 1

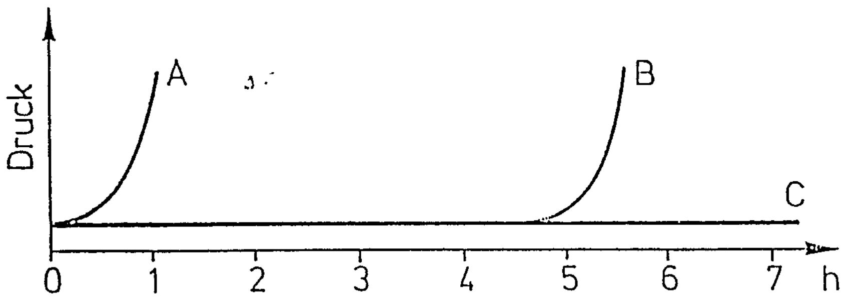

# Oxaalkanpolyphosphonsäuren, ihre Verwendung als Thresholder sowie diese Verbindungen enthaltende, komplexierend wirkende Zusammensetzungen

Die Erfindung betrifft Oxaalkanpolyphosphonsäuren und ihre Salze, ihre Verwendung als Thresholder sowie die genannten Oxaalkanpolyphosphonsäurederivate enthaltende, komplexierend wirkende Zusammensetzungen.

Aus der DE-OS 34 34 667 ist es bekannt, 4-Dimethylamino-1-hydroxybutan-1,1-diphosphonsäure durch Phosphonylierung aus 4-Dimethylaminobuttersäurehydrochlorid herzustellen.

Ferner ist es aus EP 39 033 bekannt, ω-Amino-1-hydroxyalkyliden-1,1-bisphosphonsäuren durch Phosphonylierung aus ω-Aminocarbonsäuren herzustellen. Beide Produkte besitzen komplexierende und Threshold-wirksame Eigenschaften.

Aufgrund der steigenden Belastung der Gewässer durch Ethylendiamintetraessigsäure, EDTA, ist die Suche nach entsprechenden Substituenten ein aktuelles Problem. Von besonderem Nachteil ist dabei die schlechte biologische Abbaubarkeit von EDTA. Da EDTA im Gegensatz zu den meisten Phosphonatkomplexbildnern keine Threshold-Aktivität besitzt, muß es in vielen technischen Prozessen, in denen es infolge der Härtebildner des Wassers zur Scale-Bildung kommt, in stöchiometrischen Mengen für eine ausreichende Komplexierung eingesetzt werden. In vielen Fällen wird deshalb EDTA durch das Strukturanalogon Ethylendiamintetramethylenphosphonsäure, EDMP, das den gewünschten Threshold-Effekt aufweist, substituiert. Wie die meisten anderen komplexbildenden und Threshold-wirksamen Phosphonate hat EDMP ebenfalls den Nachteil schlechter biologischer Abbaubarkeit.

Ziel der vorliegenden Erfindung ist es folglich, organische Phosphonsäurederivate zu schaffen, die eine hervorragende Threshold-Aktivität sowie komplexierende Eigenschaften zeigen.

Dieses Ziel wird durch neue Oxaalkanpolyphosphonsäuren erreicht.

Die Erfindung betrifft Oxaalkanpolyphosphonsäuren und ihre Salze der allgemeinen Formel (I)

$$R^1 - A - O - \begin{matrix} R^2 \\ | \\ C \\ | \\ H \end{matrix} - \begin{matrix} PO_3M_2 \\ | \\ C \\ | \\ PO_3M_2 \end{matrix} - OH \qquad (I)$$

in der

$R^1$ für eine $C_1$ bis $C_{10}$-Alkylgruppe,
eine $C_6$ bis $C_{10}$-Arylgruppe, die gegebenenfalls substituiert ist,
eine Gruppe der allgemeinen Formel

$$\begin{matrix} R^2 \\ | \\ -CCOOM \\ | \\ H \end{matrix}$$

oder eine Gruppe der allgemeinen Formel

$$\begin{matrix} H \\ | \\ -CC(PO_3M_2)_2OH \\ | \\ R^2 \end{matrix}$$

steht,
$R^2$ für H oder Methyl steht,
A für die Struktureinheit

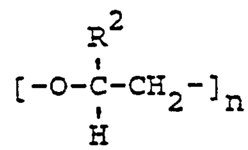

steht, worin n eine ganze Zahl von 1 bis 20 ist und
M für H oder das Kation einer Base steht.

Die erfindungsgemäßen Oxaalkanpolyphosphonsäuren haben den Vorteil einer ausgeprägten Threshold-Aktivität, so daß sie für eine vollständige Fällungsinhibierung von z.B. Calciumsulfat und Calciumcarbonat in geringeren Impfmengen als üblich dosiert werden können. Das bedeutet zugleich einen ökologischen Vorteil, da für die gleiche Impfleistung geringere Phosphormengen in die Umwelt gebracht werden. Dies wirkt sich besonders vorteilhaft aus, wenn die Substanzen als Sequestriermittel und damit in größeren Mengen eingesetzt werden. Schließlich ist aufgrund der Sauerstoffbrücken auch mit einer besseren biologischen Abbaubarkeit dieser Chelatisiermittel zu rechnen. Bekannterweise sind komplexbildende Phosphonate mit reinen Kohlenstoffbrücken wie im EDMP oder Alkylresten biologisch nur schwer abbaubar.

Die Erfindung betrifft außerdem die Verwendung der Verbindungen der allgemeinen Formel (I) als Komplexiermittel und als Thresholder.

Die Erfindung betrifft ferner Zusammensetzungen, die eine oder mehrere Verbindungen der allgemeinen Formel (I) mit den oben angegebenen Bedeutungen für $R^1$, $R^2$, A und M in komplexierend wirksamen Konzentrationen enthalten.

Geeignete Oxaalkanpolyphosphonsäuren im Sinne dieser Erfindung sind sowohl Oxaalkandiphosphonsäuren als auch Oxaalkantetraphosphonsäuren.

In den Verbindungen der allgemeinen Formel (I) steht $R^1$ vorzugsweise einmal für eine Alkylgruppe mit 1 bis 4 C-Atomen, wie Methyl, Ethyl, Propyl, i-Propyl, n-Butyl, i-Butyl und tert.-Butyl. Besonders bevorzugt ist Methyl.

Weiterhin steht $R^1$ bevorzugt für eine Gruppe der allgemeinen Formel

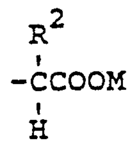

oder für eine Gruppe der allgemeinen Formel

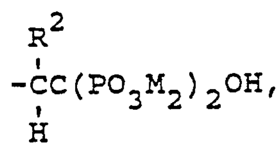

wobei $R^2$ die Bedeutung von H oder einer Methylgruppe hat.

In den Verbindungen der allgemeinen Formel (I) steht der Multiplikator n der Struktureinheit

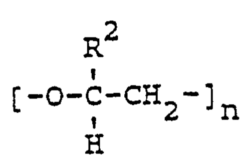

bevorzugt für eine ganze Zahl von 1 bis 12, besonders bevorzugt für n = 1, 2 oder 10 bis 12.

Bevorzugte Oxaalkandiphosphonsäuren sind die 3,6-Dioxaheptan-1-hydroxy-1,1-diphosphonsäure, 3,6,9-Trioxadecan-1-hydroxy-1,1-diphosphonsäure, 3,6,9-Trioxaundecan-11-carboxy-1-hydroxy-1,1-diphosphonsäure und die Polyglycol-ω-carboxy-1-hydroxy-1,1-diphosphonsäure.

Bevorzugte Oxaalkantetraphosphonsäuren sind 3,6,9-Trioxa-1,11-dihydroxyundecan-1,1,11,11-tetraphosphonsäure und die α,ω-Dihydroxy-polyglycol-α,α,ω,ω-tetraphosphonsäure.

Bevorzugt sind komplexierend wirksame Verbindungen der oben angegebenen allgemeinen Formel (I), in der M statt des Protons für die freien Säuren auch für Alkalimetallkationen oder ein Ammoniumkation der allgemeinen Formel $R^3R^4R^5R^6N^+$ stehen kann. Ein wesentlicher Vorteil dieser von den freien Säuren abgeleiteten Salze ist es, daß sie die Wasserlöslichkeit der Verbindungen der allgemeinen Formel (I), in der M für H steht, deutlich verbessern. Damit wird natürlich die Verwendbarkeit derartiger Verbindungen in Mitteln, die einen Threshold-Effekt ausüben, ebenfalls verbessert. Als Alkalimetallkationen kommen erfindungsgemäß insbesondere Kationen wie $Na^+$ oder $K^+$ in Frage. M kann jedoch auch für Ammoniumkationen der obigen allgemeinen Struktur stehen, in der $R^3$, $R^4$, $R^5$ und $R^6$ unabhängig voneinander Wasserstoff oder verzweigte oder unverzweigte Alkylreste mit 1 bis 12 C-Atomen sein können. Als Alkylreste kommen damit alle verzweigten und unverzweigten Reste aus der Gruppe Methyl, Ethyl, Propyl, Butyl, Pentyl, Hexyl, Heptyl, Octyl, Nonyl, Decyl, Undecyl und Dodecyl in Frage.

Als wasserlösliche Salze werden erfindungsgemäß Alkalimetallsalze der allgemeinen Formel (I) bevorzugt, in der M für ein Alkalimetall-Kation steht. Besonders bevorzugt sind die Natriumsalze.

Die genannten Verbindungen der allgemeinen Formel (I) werden durch Umsetzung von Oxaalkylcarbonsäuren der allgemeinen Formel (II)

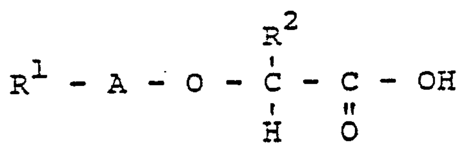 (II)

in der A und $R^2$ die oben genannten Bedeutungen haben, und $R^1$ für eine $C_1$ bis $C_{10}$-Alkylgruppe, eine $C_6$ bis $C_{10}$-Arylgruppe, die gegebenenfalls substituiert ist, oder eine Gruppe der allgemeinen Formel

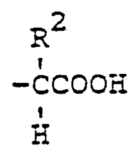

steht, mit überschüssigen Phosphonylierungsmitteln wie Phosphonsäure in Gegenwart von Phosphorylchlorid, erhalten. Geht man von Oxaalkyldicarbonsäuren als Ausgangsstoffen aus, so erhält man beim Einsatz der stöchiometrischen Menge an Phosphonylierungsreagens hauptsächlich Oxaalkandiphosphonsäuren, bei Verwendung der doppelt stöchiometrischen Menge an Phosphonylierungsreagens dagegen Oxaalkantetraphosphonsäuren.

Die verwendeten Ausgangsstoffe sind aus der Literatur allgemein bekannt bzw. lassen sich vom Fachmann in analoger Weise wie die bekannten Ausgangsstoffe herstellen.

Überraschenderweise wurde außerdem gefunden, daß die genannten Verbindungen der allgemeinen Formel (I) ausgezeichnete komplexierende Eigenschaften gegenüber Erdalkali-Ionen, insbesondere Calciumionen, zeigen.

Außer dem ausgezeichneten Komplexiervermögen zeichnen sich Verbindungen der allgemeinen Formel (I) durch eine starke Threshold-Aktivität aus, d.h. sie sind in der Lage, die Ausfällung schwerlöslicher Erdalkalimetallsalze auch in Impfmengen, das sind unterstöchiometrische Mengen, zu verhindern.

Sie sind als Komplexiermittel sehr vielseitig verwendbar: Beispielsweise können sie speziell für die Vorgänge der Wasserenthärtung Anwendung finden, wobei die vorstehend erwähnte Threshold-Wirkung eine wesentliche Rolle spielt. Es ist daher nicht notwendig, mit stöchiometrischen Mengen zu arbeiten, sondern man kann auch mit unterstöchiometrischen Mengen Fällungen schwer löslicher Calciumsalze erheblich verzögern.

Sie sind auch als Korrosions- und Steinansatzverhütungsmittel für Kühlwässer, insbesondere in Kombination mit an sich bekannten Zusätzen, gut geeignet.

Dazu werden eine oder mehrere Verbindungen der angegebenen allgemeinen Formel (I), in der $R^1$, $R^2$, A und M die oben angegebenen Bedeutungen haben, bevorzugt in Mengen von 1 bis 50 mg/l in Zusammensetzungen eingesetzt, die als Thresholder gegen steinbildende Salze Verwendung finden. Besonders gute Wirksamkeit zeigen dabei Zusammensetzungen, die eine oder mehrere Verbindungen der allgemeinen Formel (I) in Konzentrationen von 1 bis 20 mg/l enthalten, wobei in der allgemeinen Formel (I) $R^1$, $R^2$, A und n die oben genannten Bedeutungen haben und M für ein Alkalimetallkation, bevorzugt ein Natriumion, stehen.

Derartige Zusammensetzungen sind bestens geeignet, die Abscheidung von steinbildenden Salzen auch bei sehr hohen Scale-Bildungs-Konzentrationen zu verhindern. Sie benötigen dabei eine vergleichsweise niedrige Konzentration, die sie anderen strukturell vergleichbaren komplexierenden Zusammensetzungen deutlich überlegen macht.

Die erfindungsgemäßen Verbindungen der allgemeinen Formel (I) sind auch geeignet für pharmazeutische Zwecke hinsichtlich der Behandlung von Störungen des Calcium- bzw. des Phosphatstoffwechsels und der damit verbundenen Erkrankungen. Weiterhin können die erfindungsgemäßen Verbindungen in kosmetischen Zubereitungen in Zahn- und Mundpflegemitteln, beispielsweise Mundwässern, Mundpulvern, Zahncremes oder Zahnpasten, mouth washes sowie Zahnprothesehaftmitteln, zur Zahnsteintherapie und Zahnsteinprophylaxe verwendet werden. Auch zur Skelettszintigraphie in Verbindung mit Technetium-99m sind die erfindungsgemäßen Verbindungen verwendbar.

Die Erfindung wird durch die nachfolgenden Beispiele näher erläutert.

Beispiel 1

Zu einer Mischung bestehend aus 1 Mol Phosphonsäure und 1 Mol Phosphorylchlorid wurden 0,5 Mol 3,6,9-Trioxadecansäure getropft, wobei eine leichte exotherme Reaktion auftrat. Diese Reaktionsmischung wurde 10 h bei 55 °C gerührt. Anschließend wurde das Reaktionsprodukt hydrolysiert und die gebildete Salzsäure durch Einengen im Rotavapor entfernt. Zur Abtrennung von Phosphat wurde die aufkonzentrierte Reaktionsmischung auf einen pH-Wert von 8,8 eingestellt. Das auskristallisierte Dinatriumphosphat wurde abgetrennt und das Reaktionsprodukt nach pH-Korrektur durch Acetonzugabe in die feste Form umgewandelt. Auf diese Weise wurde ein wasserhaltiges Trinatriumsalz der 3,6,9-Trioxa-1-hydroxydecan-1,1-diphosphonsäure (Verb. 1) in 77 %iger Ausbeute isoliert.

| Elementaranalyse: | | | | | |
|---|---|---|---|---|---|
| | P | : | C | : | Na |
| gef.: | 2,00 | : | 6,9 | : | 3,2 |
| ber.: | 2 | : | 7 | : | 3 |

Molmasse einer entwässerten Probe berechnet aus einer Säure-Base-Titration: 392,3 nach zwei und 393,4 nach drei Äquivalenten Laugenverbrauch (theor. 390).

Beispiel 2

Das Phosphonylierungsreagens aus je einem Mol Phosphonsäure und Phosphorylchlorid wurde mit 0,25 Mol 3,6,9-Trioxaundecan-1,11-disäure tropfenweise versetzt und 18 h auf 55 bis 60 °C erwärmt. Nach Hydrolyse und Einengen wurde Dinatriumphosphat durch Einstellen auf pH = 8,8 und Auskristallisieren abgetrennt. Durch Fällung mit Methanol wurde das Heptanatriumsalz der 3,6,9-Trioxa-1,11-dihydroxyundecan-1,1,11,11-tetraphosphonsäure (Verb. 2) in fester wasserhaltiger Form erhalten. Ausbeute: 52 %.

| Elementaranalyse: | | | | | |
|---|---|---|---|---|---|
| | P | : | C | : | Na |
| gef.: | 4,00 | : | 7,89 | : | 7,08 |
| ber.: | 4 | : | 8 | : | 7 |

Beispiel 3

Durch Zugbe von 0,5 Mol 3,6,9-Trioxaundecan-1,11-disäure zu der im Beispiel 2 angegebenen Phosphonylierungsmenge wurde nach 10stündigem Erwärmen auf 55 bis 60 °C und bei analoger Aufarbeitung das Tetranatriumsalz der 3,6,9-Trioxa-1,1-diphosphono-1-hydroxyundecansäure (Verb. 3) erhalten. Ausbeute: 58 %.

| Elementaranalyse: | | | | | |
|---|---|---|---|---|---|
| | P | : | C | : | Na |
| gef.: | 2,00 | : | 8,17 | : | 4,23 |
| ber.: | 2 | : | 8 | : | 4 |

Beispiel 4

Zur Bestimmung der Impfleistung gegenüber Gips-Scale-Bildung wurde in einem praxisorientierten "Flow-Test" ein salinäres Testwasser der nachfolgend angegebenen Zusammensetzung mit Hilfe einer Kolbenhubpumpe durch eine Stahlkapillare von 1 m Länge und 1 mm Innendurchmesser gepumpt. Der Durchlauf beträgt 500 ml pro Stunde. Die Stahlkapillare wird thermostatisch überwacht; die Messung erfolgt bei 70 oder 90 °C. Sobald eine Scale-Ablagerung auftritt, verengt sich der Innendurchmesser. Dadurch wird ein Druckanstieg bewirkt, der aufgezeichnet wird. Das Druckaufzeichnungsgerät befindet sich zwischen Kolbenhubpumpe und Meßkapillare. Beim Erreichen eines Drucks von ca. 0,552 bar (8 psi) wird die Pumpe automatisch abgeschaltet. Die erhaltenen Kurven, die die vorteilhafte Eigenschaft der erfindungsgemäßen Oxaalkanpolyphosphonsäuren im Vergleich zu EDMP zeigen, sind in der Figur 1 aufgeführt.

Die dort verwendeten Buchstaben haben folgende Bedeutung:

A = Blindwert,
B = EDMP, zum Vergleich,
C = Oxaalkanpolyphosphonsäuren, wie sie nach Beispiel 1 bis 3 erhalten worden sind.

| Testbedingungen: | | |
|---|---|---|
| Scale-Bildungskonzentration | : | 8 000 mg $CaSO_4$/l |
| Temperatur | : | 70 °C |
| Elektrolytkonzentration | : | 14 000 mg NaCl/l |
| pH der Salzlösung | : | 6,4 bis 6,6 |
| Impfkonzentration | : | 5 ppm. |

Beispiel 5

Zur Ermittlung der Sequestrierleistung wurde die sodaalkalische Oxaalkanpolyphosphonatlösung, eingestellt auf einen pH-Wert von 11, mit einer Calciumchloridlösung bis zur Ausfällung von Calciumcarbonat titriert. Die gefundenen Werte sind nachfolgend in mg $CaCO_3$ pro Mg-Atom Phosphor ausgedrückt. Sie zeigen, daß die Sequestrierleistung bezogen auf die eingesetzte P-Menge bei den Oxaalkanphosphonsäuren großer als bei der Vergleichssubstanz EDMP ist.

| | Sequestrierleistung in mg $CaCO_3$/mg-Atom P |
|---|---|
| EDMP | 109 |
| Verb. 1 | 133 |
| Verb. 3 | 156 |

## Ansprüche

1. Oxaalkanpolyphosphonsäuren und ihre Salze der allgemeinen Formel (I)

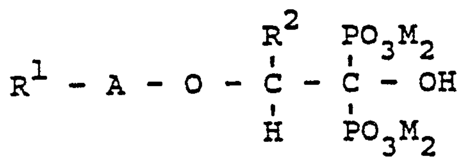 (I)

in der
$R^1$ für eine $C_1$ bis $C_{10}$-Alkylgruppe,
eine $C_6$ bis $C_{10}$-Arylgruppe, die gegebenenfalls substituiert ist,
eine Gruppe der allgemeinen Formel

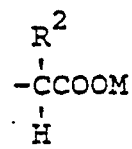

oder eine Gruppe der allgemeinen Formel

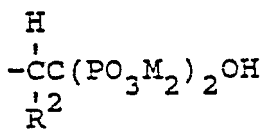

steht,
$R^2$ für H oder Methyl steht,
A für die Struktureinheit

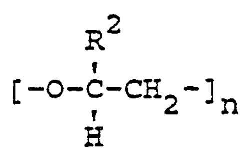

steht, worin n eine ganze Zahl von 1 bis 20 ist und
M für H oder das Kation einer Base steht.

2. Verbindungen nach Anspruch 1, dadurch gekennzeichnet, daß in der allgemeinen Formel (I) $R^1$ für eine $C_1$ bis $C_4$-Alkylgruppe, eine Gruppe der allgemeinen Formel

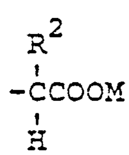

oder eine Gruppe der allgemeinen Formel

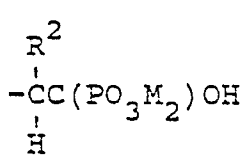

steht, n in der Struktureinheit A eine ganze Zahl von 1 bis 12 ist und M für ein Kation einer wasserlöslichen Base steht.

3. Verbindungen nach Ansprüchen 1 und 2, dadurch gekennzeichnet, daß in der allgemeinen Formel (I) $R^1$ für eine Methylgruppe, eine Gruppe der allgemeinen Formel

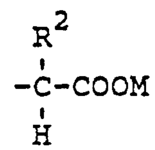

oder eine Gruppe der allgemeinen Formel

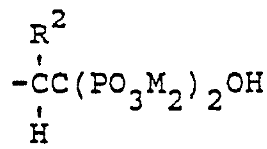

steht und n in der Struktureinheit A die Zahl 1, 2 oder 10 bis 12 ist.

4. Verbindungen der nach Ansprüchen 1 bis 3, dadurch gekennzeichnet, daß M für ein Alkalimetallkation, bevorzugt ein Natriumion, oder ein Ammoniumkation der allgemeinen Formel $R^3R^4R^5R^6N^+$ steht, in der $R^3$, $R^4$, $R^5$ und $R^6$ unabhängig voneinander Wasserstoff oder ein unverzweigter oder verzweigter Alkylrest mit 1 bis 12 C-Atomen sind.

5. Verwendung der Verbindungen der allgemeinen Formel (I) nach Ansprüchen 1 bis 4 als Komplexierungsmittel und Thresholder.

6. Zusammensetzungen, enthaltend eine oder mehrere Verbindungen der allgemeinen Formel (I) nach Ansprüchen 1 bis 4, in der $R^1$, $R^2$, A und M die oben angegebenen Bedeutungen haben, in Konzentrationen von 1 bis 50 ppm.

7. Zusammensetzungen nach Anspruch 6, enthaltend ein oder mehrere Verbindungen der allgemeinen Formel (I), in der $R^1$ für eine Methylgruppe, eine Gruppe der allgemeinen Formel

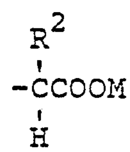

oder eine Gruppe der allgemeinen Formel

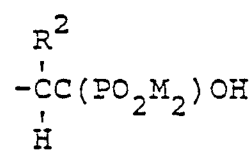

steht, n in der Struktureinheit A die Zahl 1, 2 oder 10 bis 12 ist und M für ein Alkalimetallkation, bevorzugt für ein Natriumion, stehen, in Konzentrationen von 1 bis 20 ppm.

D 8119

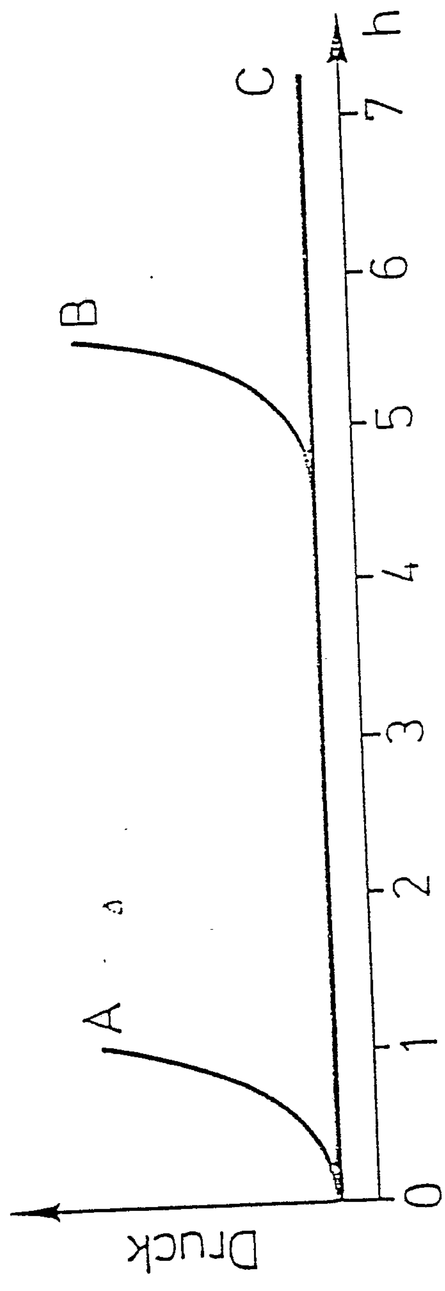


Figur 1